Europäisches Patentamt

European Patent Office

Office européen des brevets

(11) Veröffentlichungsnummer: **0 239 659 B1**

(19)

(12) EUROPÄISCHE PATENTSCHRIFT

(45) Veröffentlichungstag der Patentschrift: **29.01.92**

(21) Anmeldenummer: **86104464.2**

(22) Anmeldetag: **02.04.86**

(51) Int. Cl.⁵: **G02C 5/12**

(54) **Weich-Pads zum Einsetzen in Brillenfassungen.**

(43) Veröffentlichungstag der Anmeldung:
**07.10.87 Patentblatt 87/41**

(45) Bekanntmachung des Hinweises auf die
Patenterteilung:
**29.01.92 Patentblatt 92/05**

(84) Benannte Vertragsstaaten:
**AT CH DE FR GB IT LI NL**

(56) Entgegenhaltungen:
**EP-A- 0 146 934**
**GB-A- 2 140 934**
**US-A- 2 035 785**
**US-A- 3 189 913**
**US-A- 4 243 306**

(73) Patentinhaber: **Marwitz & Hauser GmbH**
**Dornhaldenstrasse 5**
**W-7000 Stuttgart(DE)**

(72) Erfinder: **Neef, Heinz**
**Plettenbergstrasse 42**
**W-7000 Stuttgart 1(DE)**

EP 0 239 659 B1

## Beschreibung

Die vorliegende Erfindung betrifft ein Pad-System nach dem Oberbegriff des Anspruchs 1.

Aus der US-A- 4.243.306 sind Weich-Pads bekannt, die auf Brillenfassungen aufsteckbar sind. Diese Pads können eine leicht konvex gekrümmte Auflagefläche und einen keilförmigen Horizontalschnitt aufweisen, sie haben jedoch alle gleiche Form und gleichen Querschnitt. Damit können sie neben der Aufgabe die Brillenfassung rutschsicher im Nasenflankenbereich des Brillenträgers abzustützten keine weitere Aufgabe erfüllen.

Aus der DE-A 33 19 827 ist eine Brillenfassung bekannt, die im Nasenflankenbereich angebrachte Padschenkel aufweist, in die lösbar Weich-Pads eingesetzt sind. Jeder Weich-Pad besteht aus einem weichen Material, beispielsweise aus Silikonkautschuk mit einer, in eine Ausnehmung des Padschenkels passenden Auflagefläche, mit der ein stielförmiger Fortsatz zum Einclippen in eine Durchbrechung dieser Ausnehmung fest verbunden ist.

Diese Brillenfassung hat den Vorteil, daß sie sich weich und rutschsicher auf der Nase des Brillenträgers abstützt, so daß ein beschwerdefreier und entsprechend der Anpassung korrekter Sitz der Brille gewährleistet ist.

Aus der DE-A 33 19 827 ist es auch bekannt mehrere Weich-Pads unterschiedlicher Dicke vorzusehen, so daß durch Einclippen eines Weich-Pads geeigneter Dicke eine Einstellung der Höhe des Augenrandes möglich ist.

Durch die Verwendung von Weich-Pads unterschiedlicher Dicke, bei denen Vorder- und Rückseite parallel verlaufen gelingt es die Höhe des Fassungsrandes in gewissen Grenzen einzustellen, es ist jedoch nicht möglich unterschiedlichen anatomischen Gegebenheiten der Gesichtsform Rechnung zu tragen, wie sie im Nasenflanken- und Nasenwurzelbereich auftreten können.

Es ist die Aufgabe der vorliegenden Erfindung ein Pad-System zum Einsetzen in entsprechende Ausnehmungen von Padschenkeln einer Brillenfassung zu schaffen, das es ermöglicht ein- und dieselbe Brillenfassung in einfacher Weise an unterschiedliche anatomische Gegebenheiten der Gesichtsform von Brillenträgern anzupassen.

Die Lösung dieser Aufgabe erfolgt mit einem Pad-System, das entsprechend den kennzeichnenden Merkmalen des Anspruchs 1 ausgebildet ist.

Das Pad-System besteht aus mehreren, paarweise gleichen Weich-Pads, wobei jedoch die Pad-Paare jeweils eine unterschiedliche Form haben. Ein solches Pad-System ermöglicht es dem Optiker eine vom Brillenträger nach ästhetischen Gesichtspunkten ausgewählte Brillenfassung durch Einsetzen eines Pad-Paares geeigneter Form optimal an die anatomischen Gegebenheiten der Gesichtsform anzupassen. Dabei kann auch sehr unterschiedlichen anatomischen Gegebenheiten Rechnung getragen werden, wie sie beispielsweise zwischen Menschen verschiedener Rassen auftreten.

Die Pads des Pad-Systems können so ausgebildet sein, daß sie auswechselbar in die Ausnehmungen der Padschenkel eingeclipt werden können. Es ist auch möglich die Pads in die Stützplättchen einzukleben.

Bei dem Pad-System nach der Erfindung werden Weich-Pads verwendet. Diese bestehen aus einem Material mit physiologisch unbedenklichen Eigenschaften, dessen Shore-D-Härte im Bereich 10 bis 40 liegt. Als ein solches Material findet vorzugsweise Silikon-Kautschuk Verwendung.

Zweckmäßige Ausgestaltungen des Pad-Systems nach der Erfindung ergeben sich aus den Unteransprüchen 2 bis 4.

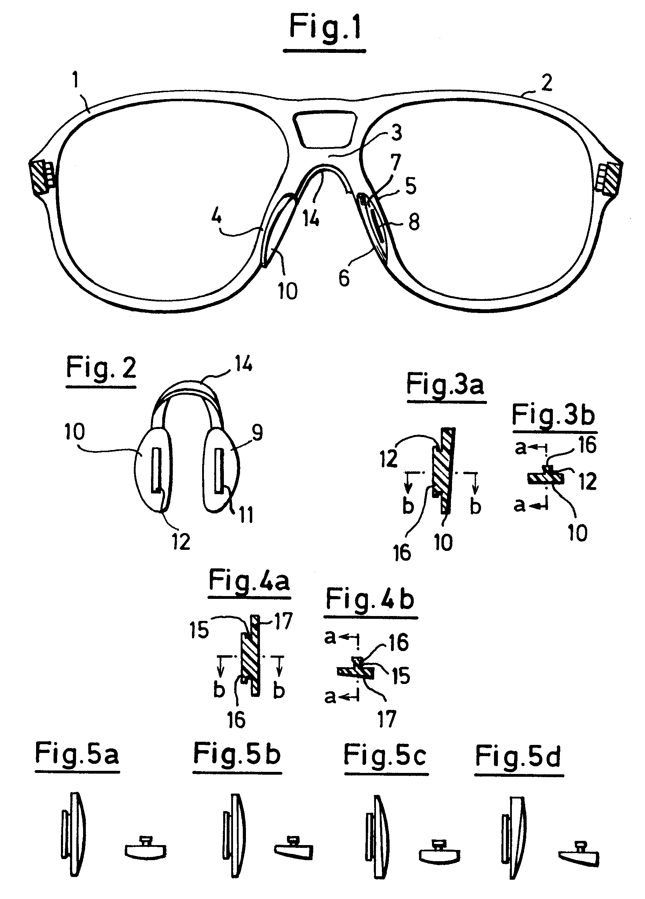

Die Erfindung wird im folgenden anhand der Fig. 1-5 der beigefügten Zeichnungen näher erläutert. Im einzelnen zeigen:

Fig. 1

eine Ansicht einer Brillenfassung in die ein Paar Weich-Pads nach der Erfindung eingeclipt werden können, gesehen von der Augenseite;

Fig. 2

ein Paar Weich-Rads zum Einclippen in die Fassung der Fig. 1;

Fig. 3a und 3b

einen Längs- und einen Querschnitt durch einen Weich-Pad eines Pad-Paares nach einem ersten Ausführungsbeispiel;

Fig. 4a und 4b

einen Längs- und einen Querschnitt nach einem zweiten Ausführungsbeispiel;

Fig. 5a bis 5d

jeweils einen Längs- und Querschnitt durch vier Ausführungsbeispiele von Weich-Pads mit gekrümmter Auflagefläche, die in vier Pad-Paaren unterschiedlicher Form Verwendung finden.

Die in Fig. 1 dargestellte Brillenfassung hat zwei Fassungsränder (1, 2), die über einen Nasensteg (3) miteinander verbunden sind. In die Fassungsränder (1, 2) sind die Brillenlinsen eingesetzt. Jeweils an der Schläfenseite der Fassungsränder sind die hier nicht dargestellten Brillenbügel mit Scharnieren befestigt. Im Nasenflankenbereich der Fassungsränder (1, 2) ist jeweils ein Padschenkel (4, 5) angebracht. Der rechte Radschenkel (5) zeigt eine Ausnehmung (6), deren zur Nase des Brillenträgers weisende innere Fläche (7) eben ist. Die Tiefe der Ausnehmung (6) beträgt etwa 1 mm. Die Fläche (7) ist mit einem Schlitzloch (8) versehen, das zum Einclippen von Weich-Pads (9, 10) dient, wie sie beispielsweise in Fig. 2 dargestellt sind. Beim Einclippen des Pads (9) in die Ausnehmung (6) durchdringt der stielförmige Fortsatz (11) das Schlitzloch (8) und sorgt durch die Elastizität des Pad-Materials für einen festen Sitz des Pads.

Die Pads (9, 10) nach Figur 2 sind mittels eines Bandes (14) miteinander verbunden, das zweckmäßig aus dem Material der Pads besteht. Das Pad-Paar (9, 10) und das Band (14) sind vorteilhaft einstückig hergestellt. Wie Fig. 1 zeigt bildet das Band (14) nach dem Einsetzen der Pads (9, 10) in die Brillenfassung einen Sattelsteg, d.h. das Band (14) liegt auf der Nasenwurzel auf und hat eine tragende Funktion. Damit läßt sich das Gewicht der Brille über eine verhältnismäßig große Auflagefläche verteilen.

In der Darstellung der Fig. 1 ist in dem linken Padschenkel (4) der Weich-Pad (10) eingeclipt. Man erkennt, daß die Auflagefläche des Pads (10) den äußeren Rand des Padschenkels (4) überragt, so daß die Brillenfassung in Gebrauchsstellung nur mit den Pads (9, 10) auf der Nasenflanke des Brillenträgers aufliegt.

Verwendet man Pads gleicher Dicke, so ist der Nasenwinkel, d.h. der Winkel, den die Pads einschließen durch die Ausnehmung (7) der Padschenkel (4, 5) vorgegeben.

Durch das Pad-System nach der Erfindung, bei dem die Pads an verschiedenen Stellen ihrer Auflagefläche eine unterschiedliche Dicke haben, läßt sich durch Wahl eines entsprechenden Pad-Paares der Nasenwinkel abweichend von der Vorgabe durch die Ausnehmung (7) in den Padschenkeln (4, 5) der Fassung wählen.

Die Fig. 3a und 3b zeigen den Pad (10), der keilförmig, im dargestellten Beispiel im Vertikalschnitt keilförmig ist. Der stielförmige Fortsatz zum Befestigen im zugeordneten Padschenkel ist mit (12) bezeichnet; seine hintere Abschlußfläche (16) ist etwas größer als die Querschnittsfläche des Fortsatzes (12).

In Fig. 4a und b ist ein Ausführungsbeispiel dargestellt, in dem ein Pad (17) im Horizontalschnitt der Fig. 4b keilförmig ist.

Man erkennt, daß man durch Verwendung von Weich-Pad-Paaren nach Fig. 3 oder Fig. 4 die Neigung der Auflageflächen zur Nasenflanke vorwählen kann, d.h. durch Verwendung von Pad-Paaren unterschiedlicher Form wird eine Brillenfassung mit festen Padschenkeln (4, 5) an unterschiedliche anatomische Gegebenheiten anpaßbar.

Die Weich-Pads nach den Fig. 3 und 4 sind so ausgebildet, daß ihre Dicke an der dünnsten Seite die Tiefe der Ausnehmung der Padschenkel übersteigt; die minimale Dicke beträgt etwa 1,5 mm.

Es ist auch eine Kombination der Fig. 3a und 4b möglich, d.h. ein Pad der im Vertikal- und Horizontalschnitt keilförmig ist.

Für bestimmte Gesichtsformen ist die Anpassung einer Brillenfassung besonders schwierig, z.B.

bietet die asiatische Gesichtsform kaum stützende Auflagenflächen im Nasenwurzelbereich.

Die Fig. 5a bis 5d zeigen Formen für Weich-Pads von PadPaaren, die auch bei schwierigen anatomischen Gegebenheiten eine einwandfreie Brillenanpassung ermöglichen. Bei allen gezeigten Formen ist die Auflagefläche der Pads konvex gekrümmt. Im Beispiel der Fig. 5a ist der Pad im Vertikal- und Horizontalschnitt gekrümmt, die Auflagefläche hat die Form einer flachen Kugel, eines Ellipsoides oder einer ähnlichen Raumfläche. Im Beispiel der Fig. 5b ist der Pad zusätzlich im Horizontalschnitt keilförmig ausgebildet; im Beispiel der Fig. 5c ist der Pad im Vertikalschnitt keilförmig. Fig. 5d zeigt ein Ausführungsbeispiel, in dem der Pad im Horizontal- und Vertikalschnitt keilförmig ist und eine konvex gekrümmte Auflagefläche ausweist.

Es sind eine Vielzahl anderer Formen für die Pads eines Pad-Systems nach der Erfindung denkbar, die durch entsprechende Verteilung der Paddicke über die Auflagefläche besonderen anatomischen Gegebenheiten bei Brillenträgern Rechnung tragen lassen.

**Patentansprüche**

1.   Pad-System, bestehend aus mehreren paarweise gleichen Weich-Pads zum lösbaren Einsetzen in entsprechende Ausnehmungen (6) der im Nasenflankenbereich einer Brillenfassung (1,2) angebrachten Padschenkel (4,5), dadurch gekennzeichnet, daß die Pads (9,10,17) keilförmig, mit konvex gekrümmter Auflagefläche oder keilförmig mit zusätzlich konvex gekrümmter Auflagefläche ausgebildet sind, wobei die Pad. Paare jeweils eine unterschiedliche Form haben.

2.   Pad-System nach Anspruch 1, dadurch gekennzeichnet, daß der Pad (10) im Vertikalschnitt keilförmig ist.

3.   Pad-System nach Anspruch 1, dadurch gekennzeichnet, daß der Pad (17) im Horizontalschnitt keilförmig ist.

4.   Pad-System nach Anspruch 1, dadurch gekennzeichnet, daß zusammengehörende Pads (9,10) eines Weich-Pad-Paares durch ein Band (14) aus weichem Material miteinander verbunden sind, das nach dem Einsetzen der Pads einen Sattelsteg bildet.

**Claims**

1.   Pad system consisting of a plurality of pairs of pads, the pads of each pair being identically configured and being detachably insertable in corresponding recesses formed in the pad legs of a spectacle frame in the region of the nose flanks of the wearer, characterized in that the pads (9, 10, 17) having a wedge-shaped configuration with a convex formed contact surface or having a wedge-shaped configuration with an additional convex formed contact surface, whereby the pairs of pads having in each case a different form.

2. Pad system according claim 1, characterized in that the pad (10) having a wedge-shaped vertical cross section.

3. Pad system according claim 1, characterized in that the pad (17) having a wedge-shaped horizontal cross section.

4. Pad system according claim 1, characterized in that the pair of pads (9, 10) of a soft-pad pair having a band interconnecting the pads, the band consist of a soft-material and defines a saddle bridge after said pads are seated in said recesses, respectively.

**Revendications**

1. Système de plaquettes, composé de plusieurs plaquettes souples identiques par paire, qui sont destinées a être insérées de façon amovible dans des évidements (6) adéquats ménagés dans des ailes de plaquettes (4, 5) prévus dans la zone des flancs du nez d'une monture de lunettes (1, 2), caractérisé en ce que les plaquettes (9, 10, 17) ont une forme en coin, sont pourvues d'une surface d'appui de courbure convexe, ou ont une forme en coin et possèdent en plus une surface d'appui de courbure convexe, les paires de plaquettes ayant des formes différentes entre elles.

2. Système de plaquettes selon la revendication 1, caractérisé en ce que la plaquette (10) possède une forme en coin en section verticale.

3. Système de plaquettes selon la revendication 1, caractérisé en ce que la plaquette (17) possède une forme en coin en section horizontale.

4. Système de plaquettes selon la revendication 1, caractérisé en ce que des plaquettes (9, 10) appareillées d'une paire de plaquettes souples sont reliées entre elles par une bande (14) faite d'un matériau souple et forment un nez selle après la mise en place des plaquettes.

## Fig.1

## Fig. 2

## Fig.3a

## Fig.3b

## Fig.4a

## Fig.4b

## Fig.5a

## Fig.5b

## Fig.5c

## Fig.5d